(19) Europäisches Patentamt
European Patent Office
Office européen des brevets

(11) **EP 2 216 698 A2**

(12) **EUROPÄISCHE PATENTANMELDUNG**

(43) Veröffentlichungstag:
**11.08.2010 Patentblatt 2010/32**

(51) Int Cl.:
***G05B 19/408*** *(2006.01)*

(21) Anmeldenummer: **10153085.5**

(22) Anmeldetag: **09.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **09.02.2009 DE 102009008121**

(71) Anmelder: **DECKEL MAHO Pfronten GmbH 87459 Pfronten (DE)**

(72) Erfinder:
• **Neumaier, Josef
  87459, Pfronten (DE)**
• **Lochbihler, Thomas
  6682, Vils (AT)**
• **Hansen, Uwe-Carsten
  87637, Eisenberg (DE)**

(74) Vertreter: **MERH-IP
Matias Erny Reichl Hoffmann
Paul-Heyse-Strasse 29
80336 München (DE)**

(54) **Verfahren und Vorrichtung zum Erzeugen von transformierten Steuerdaten zum Steuern eines Werkzeugs an einer Werkzeugmaschine**

(57) Die vorliegende Erfindung betrifft ein Verfahren und eine Vorrichtung zum Erzeugen von transformierten Steuerdaten zum Steuern eines Werkzeugs (130) an einer Werkzeugmaschine (100) zum Bearbeiten eines in ein Einspannmittel (120) der Werkzeugmaschine (100) eingespannten Werkstücks (200) durch Zerspanen, mit dem Verfahrensschritt Bestimmen von Steuerdaten, die angeben, welche erste Werkzeugbahn durch das Werkzeug (130) der Werkzeugmaschine (100) mit welcher ersten Werkzeugorientierung (W01) zum Bearbeiten des eingespannten Werkstücks (200) abzufahren ist, wenn das Werkstück (200) entsprechend eines Einspannsituation-Sollzustands, der einen Sollzustand einer Einspannsituation des in das Einspannmittel (120) eingespannten Werkstücks (200) angibt, in das Einspannmittel (120) eingespannt ist, gekennzeichnet durch die weiteren Verfahrensschritte Ermitteln eines Einspannsituation-Istzustands, der einen tatsächlichen Istzustand der Einspannsituation des in das Einspannmittel (120) eingespannten Werkstücks (200) angibt, Ermitteln einer Einspannsituation-Abweichung zwischen dem Einspannsituation-Istzustand und dem Einspannsituations-Sollzustand, die eine Abweichung zwischen dem Einspannsituation-Istzustand und dem Einspannsituations-Sollzustand angibt, und Erzeugen von transformierten Steuerdaten durch Ausführen einer Transformation zumindest eines Teils der bestimmten Steuerdaten in Abhängigkeit der ermittelten Einspannsituation-Abweichung, wobei die transformierten Steuerdaten angeben, welche zweite Werkzeugbahn durch das Werkzeug (130) der Werkzeugmaschine (100) mit welcher zweiten Werkzeugorientierung zum Bearbeiten des eingespannten Werkstücks (200) abzufahren ist, wenn das Werkstück (200) entsprechend des ermittelten Einspannsituation-Istzustands mit der bestimmten Einspannsituation-Abweichung in das Einspannmittel (120) eingespannt ist.

Fig. 1

EP 2 216 698 A2

**Beschreibung**

Die vorliegende Erfindung betrifft ein Verfahren und eine Vorrichtung zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen.

Insbesondere betrifft die Erfindung ein Verfahren und eine Vorrichtung zum Erzeugen von transformierten Steuerdaten zum Steuern eines vorgegebenen Fräswerkzeugs an einer CNC-gesteuerten Werkzeugmaschine, insbesondere einer CNC-gesteuerten Fräs-, Dreh-, Fräs-/Drehmaschine, oder Dreh-/Fräsmaschine oder einem CNC-gesteuerten Bearbeitungszentrum zum Bearbeiten eines in der Werkzeugmaschine oder dem Bearbeitungszentrum eingespannten Werkstücks, insbesondere zum Bearbeiten des Werkstücks von einem Rohteil in ein Fertigteil mit vorgegebener Fertigteilgeometrie.

**HINTERGRUND DER ERFINDUNG**

CNC-gesteuerte Werkzeugmaschinen sind in unterschiedlichen Ausführungen aus dem Stand der Technik bekannt.

CNC (Computerized Numeric Control) bedeutet hierbei, dass die Werkzeugmaschine numerisch gesteuert wird, z. B. anhand eines generierten NC-Programms oder CNC-Programms. Die Werkzeugmaschine ist dazu geeignet, mit einem Werkzeug ausgerüstet zu werden, das Material von dem Werkstück durch Zerspanen abträgt. Die Steuerung des Werkzeugs erfolgt hierbei mittels einer Steuervorrichtung anhand von Steuerdaten, z. B. Steuerdaten, die anhand eines CNC-Programms vorgegeben sind. Somit wird eine präzise maschinelle Bearbeitung eines in der Werkzeugmaschine eingespannten Werkstücks anhand der generierten Steuerdaten möglich.

Nach dem Stand der Technik werden CNC-Programme mittels CAM-Systemen (CAM für Computer Added Manufacturing) bzw. CAD/CAM -Systemen softwareunterstützt erstellt. Ein erzeugtes CNC-Programm umfasst Verfahrbefehle, die ein in ein Aufnahmemittel eines Fräskopfes der Werkzeugmaschine eingesetztes Werkzeug relativ zu einem in der Werkzeugmaschine eingespannten Werkstück entlang einer generierten Bahn steuert, um entlang der Bahn Material des Werkstücks bei Abfahren der Bahn abzutragen.

Die Bahnberechnung basiert hierbei auf geometrischen Größen und orientiert sich an der angestrebten Fertigteilgeometrie des Werkstücks, wobei im Allgemeinen Material des Werkstücks durch Abfahren der berechneten Werkzeugbahnen Bahn für Bahn abgetragen wird, bis die Fertigteilkontur erreicht wird. Hierfür können die Steuerdaten zusätzlich Instruktionen umfassen, die programmgesteuert automatisch Werkzeugwechsel während der Bearbeitung des Werkstücks in der Werkzeugmaschine befehlen und/oder programmgesteuert automatisch Werkstückwechsel befehlen, so dass diese Werkzeugwechsel und/oder Werkstückwechsel programmgesteuert anhand der Steuerdaten automatisch an der Werkzeugmaschine ausgeführt werden.

Besonders universell einsetzbar sind CNC-gesteuerte Werkzeugmaschinen, die zumindest 5 Achsen umfassen, die es ermöglichen, das Werkzeug in 5 Freiheitsgraden frei durch den Raum zum Abtragen von Material von dem Werkstück zu bewegen, wobei die 5 Bewegungsfreiheitsgrade hierbei die 3 Raumrichtungsfreiheitsgrade (meist orthogonal, z. B. bezeichnet als x-Achse, y-Achse und z-Achse) und 2 Winkel□bzw. Rotationsfreiheitsgrade umfassen, die eine beliebige Werkzeugorientierung bzw. Werkzeugorientierungssteuerung ermöglichen. Heutige CNC-Werkzeugmaschinen mit 5 Achsen ermöglichen es, die 5 genannten Freiheitsgrade der 5 Achsen simultan programmgesteuert anzusteuern, wobei dem Stand der Technik des Weiteren CNC-Werkzeugmaschinen bekannt sind, die 6 Achsen umfassen, insbesondere 3 Translationsachsen und 3 Rotationsachsen, um die 5 Freiheitsgrade der Werkzeugsteuerung simultan über 6 Achsen programmgesteuert anzusteuern. Prinzipiell sind auch Werkzeugmaschinen mit mehr als 6 Achsen möglich.

Jedoch treten bei den im Stand der Technik bekannten CNC-Werkzeugmaschinen Probleme auf, da die Steuerdaten unter bestimmten Voraussetzungen, vorgegebenen Bedingungen und/oder Annahmen, insbesondere Annahmen über eine tatsächliche Einspannsituation des Werkstücks, berechnet bzw. erzeugt werden. Insbesondere ist es somit beispielsweise für das Erzeugen von Steuerdaten erforderlich, dass eine Position bzw. Lage des Werkstücks in dem in ein Einspannmittel der Werkzeugmaschine eingespannten Zustand bekannt ist, so dass möglichst präzise Bahnen für das Erzeugen von Steuerdaten berechnet werden können, die eine Werkzeugposition und/oder eine Werkzeugorientierung relativ zu dem Werkstück in einem der Bahnberechnung zu Grunde liegendem Einspannsituation-Sollzustand bzw. relativ zu dem Einspannmittel, in dem das Werkstück eingespannt ist, präzise vorgeben.

Insbesondere wird in Verfahren zum Erzeugen von Steuerdaten nach dem Stand der Technik deshalb für die Bahnberechnung vorausgesetzt bzw. angenommen, dass ein zu bearbeitendes Werkstück präzise entsprechend des idealen Einspannsituation-Sollzustands in das Einspannmittel der Werkzeugmaschine eingespannt wird. Es ist demnach weiterhin erforderlich, dass die Position und Lage bzw. Orientierung des Werkstücks im Einspannmittel bei Bearbeiten des Werkstücks durch ein Werkzeug bei Abfahren einer berechneten Werkzeugbahn anhand der erzeugten Steuerdaten exakt dem Einspannsituation-Sollzustand entsprechen muss, von dem bei Berechnung der Bahndaten ausgegangen wird, um das Werkstück entsprechend den Berechnungen präzise bearbeiten zu können.

Hierbei tritt folglich das Problem auf, dass ein Werkstück bei Bearbeitung in der Werkzeugmaschine anhand der erzeugten Steuerdaten fehlerhaft bzw. unpräzise bearbeitet wird, wenn das Werkstück abweichend von der, der Bahnberechnung zugrunde liegenden, Einspannsituation in dem Einspannmittel bzw. abweichend von dem Einspannsituation-Sollzustand des Werkstücks eingespannt ist.

Aus der DE 10 2007 016 056A1 ist es bekannt, dass bei Bearbeitung eines Werkstücks an einer Laserabtragsmaschine ein rotatorischer bzw. translatorischer Versatz eines eingespannten Werkstücks optisch ausgemessen wird. Basierend auf dem ermittelten Versatz werden ursprüngliche Fertigungsdaten, d.h. CAD/CAM-Daten modifiziert, und in Abhängigkeit der ermittelten tatsächlichen Einspannung des Werkstücks aus den CAD/CAM-Fertigungsdaten Steuerdaten, d.h. z.B. ein NC-Programm, erzeugt, das dann an die Laserabtragsmaschine übergeben wird. Dies ist jedoch problematisch, da bei aufeinanderfolgender Bearbeitung gleicher Werkstücke, z.B. in einer Massenproduktion, bei jedem Werkstück CAD/CAM-Fertigungsdaten modifiziert werden müssen, basierend auf den Fertigungsdaten erneut Steuerdaten erzeugt werden müssen, die dann bei jedem Werkstück erneut an die Maschine übermittelt werden müssen, obwohl die eigentliche durchzuführende Werkstückbearbeitung gleich bleibt. Das aus der DE 10 2007 016 056 A1 bekannte Verfahren ist somit nur für Einzelbearbeitungen individueller Werkstücke geeignet und eignet sich nicht für Massenproduktionen an Werkzeugmaschinen, bzw. für Werkstückbearbeitung an Werkzeugmaschinen bei denen mehrere Werkstücke einer gleichen Bearbeitung unterzogen werden sollen.

Aus der DE 196 31620 A1 ist ein Verfahren bekannt, bei dem bei rotationssymmetrischen Werkstücken, die einer Bearbeitung mit einer Schleifscheibe an einer Schleifmaschine unterzogen werden, vor der Bearbeitung eine Neigung der Werkstückachse zu der Achse eines Rundtisches, auf dem das Werkstück aufgespannt ist, ermittelt wird. Die Zustellbewegung der Schleifscheibe wird dann entsprechend der ermittelten Neigung der Werkstückachse zur Rundachse des Werkstücktisches angepasst. Hierbei wird jedoch lediglich die Achsneigung des rotationssymmetrischen Werkstücks ermittelt und bei der Bearbeitung berücksichtigt. Eine translatorische Verschiebung des eingespannten Werkstücks wird nicht berücksichtigt. Bei einer einfachen Bearbeitung eines Zahnrads mit einer Schleifscheibe ist es hierbei nur erforderlich, die Schleifscheibe parallel zur Werkstückachse zu verfahren. Eine exakte Bestimmung der Verschiebung des Werkstücks in der tatsächlichen Einspannsituation in Richtung der Werkstückachse ist nicht erforderlich und somit gemäß der Lehre der DE 196 31 620 A1 auch nicht vorgesehen. Das aus der DE 196 31620 A1 bekannte Verfahren eignet sich somit insbesondere nicht für die Bearbeitung von nicht-rotationssymmetrischen Werkstücken an einer Werkzeugmaschine. Weiterhin eignet sich das Verfahren nicht für eine komplexere Bearbeitung z.B. an einer zumindest 5 Achsen umfassenden Werkzeugmaschine, bei der nicht nur eine einfache Schleifbewegung einer Schleifscheibe parallel zur Werkstückachse eines rotationssymmetrischen Werkstücks ausgeführt wird, sondern bei der mit ggf. wechselnden Fräs- bzw. Bohrwerkzeugen, wie z.B. Schaft-, Torus-, Kugel- oder auch Tonnenfräser bzw. anderen Bohr- oder Fräswerkzeugen, komplizierte Bewegungen des Werkzeugs relativ zu dem Werkstück in 5 Freiheitsgraden gesteuert werden müssen.

## ZUSAMMENFASSUNG DER ERFINDUNG

Eine Aufgabe der vorliegenden Erfindung ist es, ein Verfahren, eine Vorrichtung und ein Computerprogrammprodukt zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen bereitzustellen, welche die vorstehend beschriebenen Probleme der Verfahren nach dem Stand der Technik zu vermeiden vermag.

Insbesondere ist es eine Aufgabe der vorliegenden Erfindung, ein Verfahren, eine Vorrichtung und ein Computerprogrammprodukt zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen bereitzustellen, in dem eine fehlerhafte bzw. unpräzise Bearbeitung eines Werkstücks vermieden werden kann, selbst wenn das Werkstück ungenau bzw. von einem Einspannzustand-Sollzustand abweichend in ein Einspannmittel der Werkzeugmaschine eingespannt ist.

Erfindungsgemäß wird zudem ein Verfahren und eine Vorrichtung zum Steuern eines Werkzeugs an einer Werkzeugmaschine zum Bearbeiten eines in ein Einspannmittel der Werkzeugmaschine eingespannten Werkstücks durch Zerspanen bereitgestellt mit den Verfahrensschritten:

- Bestimmen von Steuerdaten zum Steuern des Werkzeugs der Werkzeugmaschine entlang einer ersten Werkzeugbahn mit einer bestimmten ersten Werkzeugorientierung zum Bearbeiten des eingespannten Werkstücks entsprechend eines Einspannsituation-Sollzustands des Werkstück, der einen Sollzustand einer Einspannsituation des in das Einspannmittel eingespannten Werkstücks angibt,
- Ermitteln eines Einspannsituation-Istzustands, der einen tatsächlichen Istzustand der Einspannsituation des in das Einspannmittel eingespannten Werkstücks angibt,
- Ermitteln einer Einspannsituation-Abweichung zwischen dem Einspannsituation-Istzustand und dem Einspannsituations-Sollzustand, die eine Abweichung zwischen dem Einspannsituation-Istzustand und dem Einspannsituations-Sollzustand angibt, und

- Steuern des Werkzeugs in Abhängigkeit der bestimmten Einspannsituation-Abweichung derart, dass das Werkzeug der Werkzeugmaschine eine zweite Werkzeugbahn mit einer bestimmten zweiten Werkzeugorientierung zum Bearbeiten des eingespannten Werkstücks abfährt.

Erfindungsgemäß werden die vorstehend beschriebenen Aufgaben gelöst durch ein Verfahren zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen nach Anspruch 1 und einer entsprechenden Vorrichtung zum Erzeugen von transformierten Steuerdaten nach Anspruch 9 gelöst.

Ferner stellt die vorliegende Erfindung eine Werkzeugmaschine mit zumindest 5 Achsen zum Bearbeiten eines Werkstücks mittels eines Werkzeugs durch Zerspanen anhand von transformierten Steuerdaten nach Anspruch 13 bereit, die eine vorstehend beschriebene erfindungsgemäße Vorrichtung umfasst.

Ferner stellt die vorliegende Erfindung ein Computerprogrammprodukt nach Anspruch 16 und einen Datenträger nach Anspruch 17, auf dem das erfindungsgemäße Computerprogrammprodukt gespeichert ist, bereit.

Bevorzugte Ausführungsformen und Ausführungsbeispiele der vorliegenden Erfindung werden durch die abhängigen Ansprüche beschrieben.

Das erfindungsgemäße Verfahren zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen umfasst den Verfahrensschritt Bestimmen von Steuerdaten, die angeben, welche erste Werkzeugbahn durch ein Werkzeug der Werkzeugmaschine mit welcher ersten Werkzeugorientierung zum Bearbeiten des eingespannten Werkstücks abzufahren ist, wenn das Werkstück entsprechend eines Einspannsituation-Sollzustands, der einen Sollzustand einer Einspannsituation des in das Einspannmittel eingespannten Werkstücks angibt, in das Einspannmittel eingespannt ist.

Insbesondere ist das erfindungsgemäße Verfahren gekennzeichnet durch die weiteren Verfahrensschritte:

  □ Ermitteln eines Einspannsituation-Istzustands, der einen tatsächlichen Istzustand der Einspannsituation des in das Einspannmittel eingespannten Werkstücks angibt,
  □ Ermitteln einer Einspannsituation-Abweichung zwischen dem Einspannsituation-Istzustand und dem Einspannsituation-Sollzustand, die eine Abweichung zwischen dem Einspannsituation-Istzustand und dem Einspannsituation-Sollzustand angibt, und
  □ Erzeugen von transformierten Steuerdaten durch

Ausführen einer Transformation zumindest eines Teils der bestimmten Steuerdaten in Abhängigkeit der ermittelten Einspannsituation-Abweichung.

Mit dem Begriff Einspannsituation-Istzustand ist hierbei die tatsächliche Einspannsituation des eingespannten Werkstücks gemeint, so dass die Einspannsituation-Abweichung im Sinne der Erfindung sowohl rotatorische, als auch translatorische Abweichungen von dem Einspannsituation-Sollzustand mit einschließt.

Dies hat den Vorteil, dass das Verfahren zum Erzeugen von Steuerdaten nach der vorliegenden Erfindung nicht nur anhand eines vorgegebenen und/oder zugrunde liegenden Einspannsituation-Sollzustands ausgeführt wird, sondern zusätzlich zumindest anhand eines ermittelten tatsächlichen Einspannsituation-Istzustands, wobei der tatsächliche Einspannsituation-Istzustand der Einspannsituation erfindungsgemäß ermittelt wird.

Somit kann insbesondere vorteilhaft festgestellt und berücksichtigt werden, wenn ein Werkstück abweichend von einem der ursprünglichen Bahnberechnung zugrunde liegenden Einspannsituation-Sollzustand eingespannt ist, d.h. sowohl betreffend eine Neigung bzw. rotatorische Verschiebung als auch betreffend eine translatorische Verschiebung im Vergleich zu dem Einspannsituation-Sollzustand. Diese Einspannsituation-Abweichung wird vorteilhaft in dem erfindungsgemäßen Verfahren durch Vergleich des ermittelten Einspannsituation-Istzustands mit dem vorgegebenen Einspannsituation-Sollzustand ermittelt und eine Erzeugung von transformierten Steuerdaten kann vorteilhaft in Abhängigkeit der ermittelten Einspannsituation-Abweichung des Werkstücks erzeugt werden.

Die bestimmten Steuerdaten bzw. zumindest Teile der Steuerdaten werden durch Transformation verändert bzw. transformiert und vorteilhaft zum Erzeugen von transformierten Steuerdaten verwendet, um transformierte Steuerdaten zu erzeugen, die dem tatsächlichen Einspannsituation-Istzustand angepasst sind und eine genaue Bearbeitung des Werkstücks ermöglichen. Dies hat insbesondere den Vorteil, dass bei Bearbeitung gleicher Werkstücke, z.B. in einer Massenproduktion, nur ein Satz Steuerdaten entsprechend der vorgegebenen Bearbeitung und anhand einem Einspannsituation-Sollzustand erzeugt werden müssen, die dann individuell bei jedem der einzelnen Werkstücke entsprechend der tatsächlichen Einspannsituation transformiert werden können. Insbesondere müssen die ursprünglich erzeugten Steuerdaten, d.h. z.B. ein zugrundeliegendes NC-Programm, für alle Werkstücke vorteilhaft nur einmal erzeugt und an die Werkzeugmaschine übermittelt werden. Dort kann bei jedem Werkstück eine individuelle Transformation durchgeführt werden, ohne dass neue, der Einspannsituation angepasste Steuerdaten erzeugt und übermittelt werden müssten.

Hierfür wird anhand der transformierten Steuerdaten erfindungsgemäß ein Werkzeug der Werkzeugmaschine in Abhängigkeit von der ermittelten Einspannsituation-Abweichung entlang einer zweiten Werkzeugbahn mit einer zweiten Werkzeugorientierung zum Bearbeiten des eingespannten Werkstücks abgefahren, vorzugsweise wenn das Werkstück entsprechend des ermittelten Einspannsituation-Istzustands mit der bestimmten Einspannsituation-Abweichung in das Einspannmittel eingespannt ist.

Dies bietet somit den Vorteil, dass transformierte Steuerdaten erzeugt werden, anhand derer ein Werkzeug der Werkzeugmaschine an die tatsächliche Einspannsituation angepasst gesteuert werden kann, indem bei Erzeugen der transformierten Steuerdaten die tatsächliche Einspannsituation des Werkstücks berücksichtigt wird.

Somit kann eine gegebenenfalls vorliegende Abweichung des tatsächlich vorliegenden Einspannsituation-Istwerts von dem Einspannsituation-Sollwert in die Erzeugung der Steuerdaten zum Steuern des Werkzeugs berücksichtigt werden bzw. korrigiert werden. Die Bearbeitung des Werkstücks anhand der transformierten Steuerdaten erfolgt somit trotz der fehlerhaften bzw. vom Sollzustand abweichenden Einspannsituation, d.h. trotz translatorischer und/oder rotatorischer Abweichung von der Soll-Einspannsituation, präzise nach Vorgabe der ursprünglichen Steuerdaten, wobei die transformierten Steuerdaten vorteilhaft derart erzeugt werden, dass die Abweichung der Einspannsituation von dem Einspannsituation-Sollwert durch die Transformation der Steuerdaten in die transformierten Steuerdaten korrigiert wird.

Insbesondere ist das erfindungsgemäße Verfahren, bei dem sowohl translatorische Verschiebung als auch rotatorische Verschiebung der Einspannsituation gegenüber der Soll-Einspannsituation berücksichtigt werden, speziell für eine komplexe Bearbeitung z.B. an einer zumindest 5 Achsen umfassenden Werkzeugmaschine geeignet, bei der nicht nur eine einfache Schleifbewegung einer Schleifscheibe parallel zur Werkstückachse eines rotationssymmetrischen Werkstücks ausgeführt wird, sondern bei der mit ggf. wechselnden Fräsbzw. Bohrwerkzeugen, wie z.B. Schaft-, Torus-, Kugeloder auch Tonnenfräser bzw. anderen Bohr- oder Fräswerkzeugen, komplizierte Bewegungen des Werkzeugs relativ zu dem Werkstück in 5 Freiheitsgraden gesteuert werden müssen.

Weiterhin ist das erfindungsgemäße Verfahren neben der Anwendung bei der Bearbeitung von rotationssymmetrischen Werkstücken, wie Zahnrädern, insbesondere auch bei der Bearbeitung von nicht-rotationssymmetrischen Werkstücken geeignet. Hierbei kann überraschen vorteilhaft eine beliebige Einspannung des Werkstücks gewählt werden, wobei die ursprünglichen Steuerdaten bereits an der Werkzeugmaschine vorliegen können, und keine neuen Steuerdaten, d.h. z.B. neu erzeugte CNC-Programme erzeugt und übermittelt werden können. Erfindungsgemäß wird die tatsächliche Einspannsituation einschließlich einer translatorischen als auch einer rotatorischen Verschiebung gegenüber einer Soll-Einspannsituation ermittelt, die den ursprünglich erzeugten Steuerdaten zu Grunde liegt. Daraufhin können transformierte Steuerdaten, d.h. z.B. direkt Verfahrbefehle, erzeugt werden, so dass das Werkzeug die vorgesehene Bearbeitungsbewegung relativ zu dem Werkstück durchführt. Hierbei spielt es überraschend keine Rolle, wie komplex die Bewegung ist, d.h. ob hierbei ggf. alle zumindest 5 Achsen gleichzeitig verfahren bzw. gesteuert werden. Auch eine gleichzeitige Ansteuerung von 5 oder mehr Achsen kann gemäß des erfindungsgemäßen Verfahrens mittels transformierter Steuerdaten durchgeführt werden. Besondere Vorteile ergeben sich durch das erfindungsgemäße Verfahren bei besonders komplexen Bearbeitungen eines symmetrischen oder asymmetrischen Werkstücks mit Werkzeugen entlang beliebig komplexer Bearbeitungsbahnen ggf. sogar bei simultaner, synchronisierter Ansteuerung aller Achsen einer zumindest 5 Achsen umfassenden Werkzeugmaschine. Dies wird insbesondere dadurch ermöglicht, dass die tatsächliche Einspannsituation bzw. Einspannsituation-Abweichung derart bestimmt wird, dass sowohl die rotatorische als auch die translatorische Verschiebung der tatsächlichen Einspannsituation gegenüber der Soll-Einspannsituation in allen Raumrichtungen ermittelt wird.

Vorzugsweise werden die vorstehend beschriebenen Steuerdaten anhand eines bereitgestellten oder generierten CNC-Programms ermittelt bzw. bestimmt, wobei die Steuerdaten vorzugsweise Verfahrbefehlen bzw. Bewegungsbefehlen entsprechen, die dazu geeignet sind, eine oder mehrere der Achsen der Werkzeugmaschine zum Steuern des Werkzeugs und/oder Werkstücks anzusteuern, um ein Verfahren des Werkzeugs und/oder des Werkstücks zu steuern. Hierbei werden vorzugsweise in dem vorstehend beschriebenen Verfahren nicht die der Steuerung zugrunde liegenden CNC-Programme modifiziert, sondern vorzugsweise die Verfahrbefehle in Abhängigkeit der Einspannsituation des Werkstücks transformiert bzw. bevorzugt direkt transformierte Maschinenverfahrbefehle basierend auf dem unveränderten CNC-Programm erzeugt, d.h. transformierte Steuerdaten erzeugt, insbesondere z.B. gegebenenfalls durch eine Nullpunktsverschiebung der Achsensteuerung. Dies wird vorzugsweise in Echtzeit direkt an der Werkzeugmaschine, d.h. während der Bearbeitung des Werkstücks direkt in der numerischen Steuerung der Werkzeugmaschine durchgeführt.

Vorzugsweise ist das Werkstück im Einspannsituation-Sollzustand des Werkstücks derart in das Einspannmittel der Werkzeugmaschine eingespannt, dass eine Mittelachse des Werkstücks deckungsgleich mit einer Rotationsachse des Einspannmittels der Werkzeugmaschine ist.

Dies hat den Vorteil, dass eine Rotationsachse des Einspannmittels, mit der das eingespannte Werkstück um die Rotationsachse des Einspannmittels, gegebenenfalls vorzugsweise anhand der Instruktionen von Steuerdaten, rotiert werden kann, im Sollzustand der Einspannsituation einer Mittelachse des Werkstücks deckungsgleich ist.

Somit kann eine Abweichung bzw. eine Einspannsituation-Abweichung zwischen Istzustand und Sollzustand der Einspannsituation einfach parametrisiert werden durch Parameter wie z. B. der Winkelstellung der Mittelachse des Werkstücks zu der Rotationsachse des Einspannmittels der Werkzeugmaschine und/oder einer Abstandsparametrisierung eines Abstands zwischen der Mittelachse des Werkstücks und der Rotationsachse des Einspannmittels, z. B. ein Abstand der Schnittpunkte der Mittel- und Rotationsachsen mit einer zu der Rotationsachse des Einspannmittels der Werkzeugmaschine orthogonalen Ebene, wobei eine Abstandsparametrisierung z. B. den Abstand und/oder eine vektorielle Richtung zwischen den Schnittpunkten der Rotationsachse des Einspannmittels und der Mittelachse des Werkstücks mit der orthogonalen Ebene zu der Rotationsachse des Einspannmittels auf einer bestimmten vorgegebenen Höhe des Einspannmittels der Werkzeugmaschine angibt.

Vorzugsweise wird die Transformation im Schritt Erzeugen von transformierten Steuerdaten weiterhin derart ausgeführt, dass ein Bearbeiten des entsprechend des Einspannsituation-Istzustands des eingespannten Werkstücks anhand der transformierten Steuerdaten an der Werkzeugmaschine vorzugsweise dem Bearbeiten des entsprechend des Einspannsituation-Sollzustands eingespannten Werkstücks anhand der bestimmten Steuerdaten an der Werkzeugmaschine entspricht.

Dies hat den Vorteil, dass die transformierten Steuerdaten exakt die Korrektur der Abweichung der Einspannsituation des Werkstücks von dem Einspannsituation-Sollzustand entsprechen, so dass ein vom Sollzustand abweichend eingespanntes Werkstück anhand der transformierten Steuerdaten genau derart bearbeitet wird, wie ein dem Einspannsituation-Sollzustand entsprechend eingespanntes Werkstück anhand der bestimmten Steuerdaten bearbeitet würde.

Vorzugsweise umfasst der Schritt Ermitteln des Einspannsituation-Istzustands des in dem Einspannmittel der Werkzeugmaschine eingespannten Werkstücks optisches Abtasten, induktives Abtasten und/oder mechanisches Abtasten einer Außenseite des Werkstücks, oder durch Abtasten durch ein anderes Verfahren.

Dies hat den Vorteil, dass durch Abtasten einer Außenseite bzw. Außenfläche des Werkstücks an verschiedenen Seiten des Werkstücks bzw. in unterschiedlichen Winkelstellungen zu dem Werkstück Punkte auf der Außenseite bzw. Außenfläche des Werkstücks ausgemessen werden können, so dass durch optisches, induktives und/oder mechanisches Abtasten die tatsächliche Einspannsituation, also der Einspannsituation-Istzustand erfasst werden kann.

Hierbei ist es z. B. möglich, dass das Werkstück aus verschiedenen Richtungen in unterschiedlichen Winkelstellungen optisch abgetastet wird, insbesondere durch Licht oder eine andere Art von elektromagnetischer Strahlung bei nicht im sichtbaren Bereich liegenden Wellenlängen.

Zusätzlich oder statt des optischen Abtastens kann durch einen Messtaster mechanisch aus verschiedenen Richtungen in unterschiedlichen Winkelstellungen eine Außenseite bzw. Außenfläche des Werkstücks zum Ermitteln der tatsächlichen Einspannsituation mechanisch abgetastet werden.

Hierfür wird das in dem Einspannmittel der Werkzeugmaschine eingespannte Werkstück vorzugsweise zum Bestimmen einer tatsächlichen Einspannsituation entsprechend dem Einspannsituation-Istzustand durch Ermitteln einer jeweiligen Position von vorzugsweise verschiedenen auf der Außenseite des Werkstücks liegenden Punkten induktiv, optisch und/oder mechanisch abgetastet.

Des Weiteren wird das vorstehend beschriebene optische, induktive und/oder mechanische Abtasten vorzugsweise von einem Abtastmittel der Werkzeugmaschine vorzugsweise automatisch ausgeführt.

Vorzugsweise werden im Schritt Erzeugen von Steuerdaten die bestimmten Steuerdaten an der Werkzeugmaschine in Echtzeit, d.h. direkt in der Steuerung an der Werkzeugmaschine während der Bearbeitung, in entsprechende Maschinenverfahrbefehle transformiert.

Dies bedeutet, dass das ursprüngliche CNC-Programm vorzugsweise nicht verändert wird, sondern Verfahrbefehle an der Werkzeugmaschine in Echtzeit, d.h. während der Bearbeitung des Werkstücks, anhand der bestimmten Einspannsituation-Abweichung bzw. in Abhängigkeit der Einspannsituation transformiert werden. Gegebenenfalls wird hierbei an der Werkzeugmaschine zum Ausführen der Verfahrbefehle eine von der Einspannsituation-Abweichung abhängende Nullpunktsverschiebung als Korrektur bzw. Transformation durchgeführt, um die in Echtzeit ermittelte Einspannsituation-Abweichung in Echtzeit zu berücksichtigen und die entsprechende Transformation auszuführen.

Vorzugsweise umfassen die bestimmten Steuerdaten Werkzeugpositionsdaten und vorzugsweise Werkzeugorientierungsdaten, wobei die Werkzeugpositionsdaten vorzugsweise eine erste Werkzeugposition des Werkzeugs zu einem ersten Zeitpunkt angeben und die Werkzeugorientierungsdaten vorzugsweise eine erste Werkzeugorientierung des Werkzeugs zu dem ersten Zeitpunkt angeben, und die Transformation im Schritt Erzeugen von transformierten Steuerdaten vorzugsweise eine Transformation der Werkzeugpositionsdaten in transformierte Werkzeugpositionsdaten und/oder vorzugsweise eine Rotationstransformation der Werkzeugorientierungsdaten in transformierte Werkzeugorientierungsdaten umfasst, wobei die transformierten Werkzeugpositionsdaten vorzugsweise eine zweite Werkzeugposition des Werkzeugs zu dem ersten Zeitpunkt angeben und die transformierten Werkzeugorientierungsdaten vorzugsweise eine zweite Werkzeugorientierung des Werkzeugs zu dem ersten Zeitpunkt angeben, wobei die Transformation und/oder die Rotationstransformation vorzugsweise derart beschaffen ist, dass die erste Werkzeugposition und die erste Werkzeugorientierung relativ zu dem Werkstück im Einspannsituation-Sollzustand zum ersten Zeitpunkt vorzugsweise der zweiten Werkzeugposition und der zweiten Werkzeugorientierung relativ zu dem Werkstück im Einspannsituation-Istzustand zum ersten Zeitpunkt entsprechen.

Dies hat den Vorteil, dass eine Abweichung der Einspannsituation des Werkstücks im Einspannsituation-Istzustand zu einem bestimmten Zeitpunkt, z.B. dem ersten Zeitpunkt, oder zu mehreren bestimmten Zeitpunkten von dem entsprechenden Einspannsituation-Sollzustand zu dem jeweiligen Zeitpunkt durch eine exakte diesem jeweiligen Zeitpunkt zuzuordnende Transformation und/oder Rotationstransformation ausgeführt werden kann, wodurch die Werkzeugposition anhand der Transformation und die Werkzeugorientierung anhand der Rotationstransformation zu diesem jeweiligen Zeitpunkt optimal korrigiert werden kann.

Vorzugsweise umfasst das Verfahren weiterhin den Schritt Abfahren der zweiten Bearbeitungsbahn durch das Werkzeug anhand der transformierten Steuerdaten, wobei die transformierten Steuerdaten vorzugsweise in Echtzeit erzeugt werden, so dass die transformierten Werkzeugpositionsdaten und die transformierten Werkzeugorientierungsdaten zu dem ersten Zeitpunkt im Wesentlichen zu dem ersten Zeitpunkt erzeugt werden, und wobei das Werkzeug im Schritt Abfahren der zweiten Bearbeitungsbahn zu dem ersten Zeitpunkt im Wesentlichen die zweite Werkzeugposition und die zweite Werkzeugorientierung einnimmt.

Dies hat den Vorteil, dass zunächst unabhängig bzw. vor der Bearbeitung des Werkstücks an der Werkzeugmaschine nach dem Stand der Technik, z. B. anhand gängiger CAD/CAM-Systeme Steuerdaten auf Grundlage eines Einspannsituation-Sollzustands generiert werden können, gegebenenfalls an einem Rechner, wodurch bei einer gegebenenfalls vom Sollzustand abweichenden Einspannsituation eines tatsächlich in die Werkzeugmaschine eingespannten Werkstücks die Bearbeitung des Werkstücks optimal erfolgen kann, indem die Steuerdaten in Echtzeit, d. h. während der Bearbeitung des Werkstücks an der Werkzeugmaschine direkt durch die Transformation in die transformierten Steuerdaten, entsprechend der tatsächlichen Einspannsituation, transformiert werden können.

Dies kann vorzugsweise automatisiert an der Werkzeugmaschine durchgeführt werden, so dass Abweichungen der Einspannsituation von der der ursprünglichen Berechnung der Steuerdaten zugrunde liegenden Einspannsituation unabhängig erfolgen kann.

Des Weiteren stellt die vorliegende Erfindung eine Vorrichtung zum Erzeugen von transformierten Steuerdaten zum Steuern eines Werkzeugs an einer Werkzeugmaschine zum Bearbeiten eines in ein Einspannmittel der Werkzeugmaschine eingespannten Werkstücks durch Zerspanen nach einem der vorstehend beschriebenen Verfahren, d.h. mit gegebenenfalls einem oder mehreren der vorstehend beschriebenen bevorzugten Merkmale, bereit.

Die erfindungsgemäße Vorrichtung umfasst ein Steuerdaten-Bestimmungsmittel zum Bestimmen von Steuerdaten, die angeben, welche erste Werkzeugbahn durch ein Werkzeug der Werkzeugmaschine mit welcher ersten Werkzeugorientierung zum Bearbeiten des eingespannten Werkstücks abzufahren ist, wenn das Werkstück entsprechend eines Einspannsituation-Sollzustands, der einem Sollzustand einer Einspannsituation des in das Einspannmittel eingespannten Werkstücks angibt, in das Einspannmittel eingespannt ist.

Weiterhin ist die Vorrichtung nach der vorliegenden Erfindung gekennzeichnet durch ein Einspannsituation-Istzustand-Ermittelmittel zum Ermitteln eines Einspannsituation-Istzustands, der einen tatsächlichen Istzustand der Einspannsituation des in das Einspannmittel eingespannten Werkstücks angibt, ein Einspannsituation-Abweichungs-Ermittelmittel zum Ermitteln einer Einspannsituation-Abweichung zwischen dem Einspannsituation-Istzustand und dem Einspannsituations-Sollzustand, die eine Abweichung zwischen dem Einspannsituation-Istzustand und dem Einspannsituations-Sollzustand angibt, und ein Steuerdaten-Erzeugungsmittel zum Erzeugen von transformierten Steuerdaten durch Ausführen einer Transformation zumindest eines Teils der bestimmten Steuerdaten in Abhängigkeit der ermittelten Einspannsituation-Abweichung, wobei ein Werkzeug der Werkzeugmaschine anhand der transformierten Steuerdaten derart gesteuert wird, dass es eine zweite Werkzeugbahn mit einer zweiten Werkzeugorientierung zum Bearbeiten des eingespannten Werkstücks abfährt, wenn das Werkstück entsprechend des ermittelten Einspannsituation-Istzustands mit der bestimmten Einspannsituation-Abweichung in das Einspannmittel eingespannt ist.

Dies hat den Vorteil, dass eine Vorrichtung bereitgestellt wird, die das vorteilhafte Verfahren wie vorstehend beschrieben ausführen kann, insbesondere zum Erzeugen von transformierten Steuerdaten, die eine Abweichung der Einspannsituation des Werkstücks von dem Einspannsituation-Sollzustand berücksichtigen und dementsprechend erzeugte Steuerdaten korrigieren.

Vorzugsweise ist die vorstehend beschriebene Vorrichtung weiterhin dazu geeignet, in einer Werkzeugmaschine eingebaut bzw. eingesetzt zu werden, wobei die Werkzeugmaschine das Einspannmittel zum Einspannen des Werkstücks umfasst.

Dies hat den Vorteil, dass die Vorrichtung direkt in der Werkzeugmaschine integriert eingebaut werden kann, um somit z. B. die Korrektur der Steuerdaten durch Transformation zum Erzeugen der transformierten Steuerdaten in Echtzeit während der Bearbeitung des Werkstücks ausführen zu können.

Vorzugsweise umfasst die Werkzeugmaschine weiterhin zumindest 5 Achsen, wobei die 5 Achsen anhand von CNC-Steuerdaten simultan steuerbar sind. Die Werkzeugmaschine ist hierbei vorzugsweise eine zumindest 5 Achsen umfassende Fräs-/Dreh-, Dreh-/Fräs-, Fräs-/Bohr-Werkzeugmaschine oder auch ein zumindest 5 Achsen umfassendes Universal-Bearbeitungszentrum.

Dies hat den Vorteil, dass das Werkzeug in 5 Bewegungsfreiheitsgraden, umfassend 3 Translationsfreiheitsgrade und 2 Rotationsfreiheitsgrade, für eine Steuerung des Werkzeugs entlang einer berechneten Bahn bewegt werden kann. Die Flexibilität und Bewegungsfreiheit durch die 5 Freiheitsgrade garantiert des Weiteren, dass eine notwendige Transformation zum Korrigieren der Steuerdaten für das Erzeugen der transformierten Steuerdaten tatsächlich auch kinematisch durch die Werkzeugführung ausgeführt werden kann.

Des Weiteren umfasst die Werkzeugmaschine vorzugsweise ein Abtastmittel, wobei der Schritt Ermitteln des Einspannsituation-Istzustands des in dem Einspannmittel der Werkzeugmaschine eingespannten Werkstücks optisches, induktives und/oder mechanisches Abtasten einer Außenseite des Werkstücks umfasst, wobei des Weiteren vorzugsweise das optische, induktive und/oder mechanische Abtasten von dem Abtastmittel der Werkzeugmaschine vorzugsweise automatisch ausgeführt wird.

Dies hat den Vorteil, dass die Werkzeugmaschine selbst Abtastmittel umfasst, mit denen der Einspannsituation-Istzustand des in das Einspannmittel der Werkzeugmaschine eingespannten Werkstücks erfasst werden kann.

Des Weiteren stellt die vorliegende Erfindung eine Werkzeugmaschine mit zumindest 5 Achsen zum Bearbeiten eines Werkstücks mittels eines Werkzeugs durch Zerspanen anhand von Steuerdaten bereit, wobei die Steuerdaten angeben, welche Werkzeugbahn durch das Werkzeug mit welcher Werkzeugorientierung zum Bearbeiten des eingespannten Werkstücks abzufahren ist, wobei die Werkzeugmaschine weiterhin Einspannmittel zum Einspannen des Werkstücks umfasst und insbesondere durch eine der vorstehend beschriebenen Vorrichtungen nach der vorliegenden Erfindung ausgerüstet ist, bzw. diese umfasst.

Vorzugsweise umfasst die Werkzeugmaschine ein Abtastmittel, wobei der Schritt Ermitteln des Einspannsituation-Istzustands des in dem Einspannmittel der Werkzeugmaschine eingespannten Werkstücks optisches Abtasten, induktives Abtasten und/oder mechanisches Abtasten vorzugsweise einer Außenseite des Werkstücks umfasst, wobei das optische, induktive und/oder mechanische Abtasten von dem Abtastmittel der Werkzeugmaschine vorzugsweise automatisch ausgeführt wird.

Schließlich umfasst die Werkzeugmaschine vorzugsweise weiterhin einen Teileapparat und/oder eine vollintegrierte Rundachse, wobei der Teileapparat bzw. die Rundachse, insbesondere vorzugsweise ein NC-Teilapparat bzw. eine vollintegrierte NC-Rundachse, mit einem Einspannmittel zum Einspannen des Werkstücks, wobei der Teileapparat und/oder die Rundachse weiterhin vorzugsweise dazu geeignet ist, das eingespannte Werkzeug um eine Rotationsachse des Einspannmittels zu rotieren.

Dies bietet den Vorteil, dass das erfindungsgemäße Verfahren und die erfindungsgemäße Vorrichtung weiterhin für Werkzeugmaschinen benutzt bzw. angewendet werden können, bei denen nicht nur ein Einspannen eines Werkstücks in einem Einspannmittel der Werkzeugmaschine, z. B. auf einem Werkzeugtisch, ermöglicht ist, sondern zusätzlich ein Einspannen eines Werkstücks in einem Einspannmittel eines Teileapparats, der wiederum gegebenenfalls in einem Einspannmittel der Werkzeugmaschine, z. B. auf einem Werkzeugtisch, eingespannt sein kann.

Dies bietet den Vorteil, dass das erfindungsgemäße Verfahren und die erfindungsgemäße Vorrichtung auf gängigen Werkzeugmaschinen und gängigen Werkzeugmaschinen mit Teileapparat, insbesondere mit NC-Teileapparat, genutzt werden können.

Schließlich stellt die vorliegende Erfindung ein Computerprogrammprodukt bereit, welches dadurch gekennzeichnet ist, dass ein Rechner in Verbindung mit dem Computerprogrammprodukt oder in Verbindung mit einem Programm zum Erzeugen von Steuerdaten, insbesondere z.B. einem CAD-/CAM-Programm, und dem Computerprogrammprodukt dazu geeignet ist, zumindest eines der vorstehend beschriebenen Verfahren zum Erzeugen von Steuerdaten programmtechnisch auszuführen und die erzeugten transformierten Steuerdaten gegebenenfalls über eine Schnittstelle des Rechners an die Werkzeugmaschine zu übermitteln. Dementsprechend stellt die vorliegende Erfindung weiterhin einen Datenträger bereit, der dadurch gekennzeichnet ist, dass das vorstehend beschriebene Computerprogrammprodukt auf dem Datenträger gespeichert ist.

## KURZBESCHREIBUNG DER FIGUREN

Fig. 1 zeigt beispielhaft eine schematische Darstellung einer Werkzeugmaschine zum Bearbeiten eines in ein Einspannmittel der Werkzeugmaschine eingespannten Werkstücks durch Zerspanen.

Fig. 2 zeigt beispielhaft eine schematische Darstellung eines Einspannsituation-Sollzustands eines Werkstücks, wie er der Erzeugung von Steuerdaten zum Steuern eines Werkzeugs der Werkzeugmaschine zugrunde liegt.

Fig. 3A zeigt beispielhaft eine schematische Darstellung des Einspannsituation-Sollzustands eines Werkstücks aus Fig. 1 in einer Querschnittsdarstellung.

Fig. 3B zeigt beispielhaft eine schematische Darstellung eines Einspannsituation-Istzustands des Werkstücks zu einem ersten Zeitpunkt in einer Querschnittsdarstellung, der eine Einspannsituation-Abweichung bezüglich des in Fig. 3A gezeigten Einspannsituation-Sollzustands aufweist.

Fig. 3C zeigt beispielhaft eine schematische Darstellung einen Querschnitt des Werkstücks aus Fig. 3A in einem Einspannsituation-Sollzustand und eine entsprechende erste Werkzeugposition und erste Werkzeugorientierung eines Werkzeugs zu einem ersten Zeitpunkt.

Fig. 3D zeigt beispielhaft eine schematische Darstellung einen Querschnitt des Werkstücks aus Fig. 3B in einem Einspannsituation-Istzustand zu einem ersten Zeitpunkt und eine entsprechende zweite Werkzeugposition und zweite Werkzeugorientierung des Werkzeugs zu dem ersten Zeitpunkt nach transformierten Steuerdaten, die in einem Ausführungsbeispiel des erfindungsgemäßen Verfahrens erzeugt werden.

Fig. 4A zeigt beispielhaft eine schematische Darstellung einer Transformation der Werkzeugposition nach einem Ausführungsbeispiel des Verfahrens zum Erzeugen von transformierten Steuerdaten nach der vorliegenden Erfindung.

Fig. 4B zeigt beispielhaft eine schematische Darstellung einer Transformation einer Werkzeugorientierung nach einem Ausführungsbeispiel des Verfahrens zum Erzeugen von transformierten Steuerdaten nach der vorliegenden Erfindung.

Fig. 5 zeigt eine schematische Darstellung einer Ausführungsform einer Vorrichtung zum Erzeugen von transfromierten Steuerdaten nach der vorliegenden Erfindung.

**DETAILLIERTE BESCHREIBUNG DER FIGUREN UND BEVORZUGTER AUSFÜHRUNGSBEISPIELE DER ERFINDUNG**

Im Folgenden wird die vorliegende Erfindung detailliert anhand von Ausführungsbeispielen des Verfahrens und der Vorrichtung zum Erzeugen von transformierten Steuerdaten nach der vorliegenden Erfindung anhand beispielhafter Figuren beschrieben und erläutert.

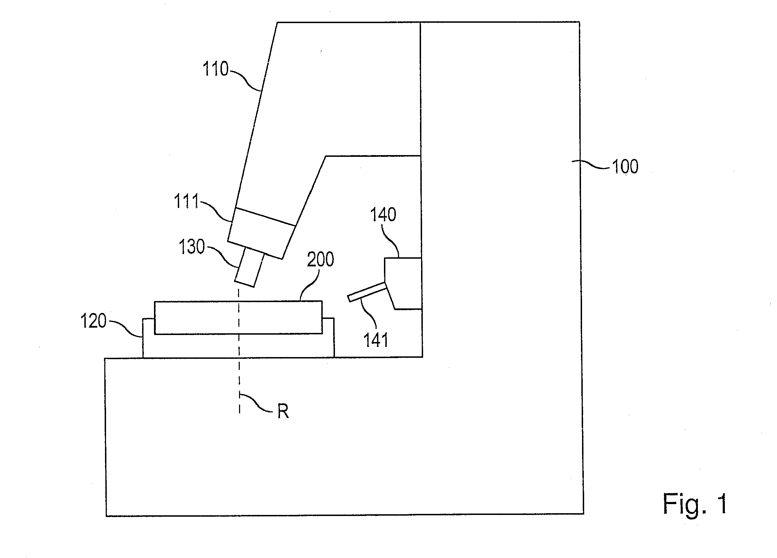

Fig. 1 zeigt beispielhaft eine Werkzeugmaschine 100, die dazu geeignet ist, ein Werkzeug 130 zum Bearbeiten eines Werkstücks 200 durch Zerspanen anhand von erzeugten Steuerdaten zu steuern. In diesem, im Folgenden beschriebenen Ausführungsbeispiel ist die Werkzeugmaschine 100 eine 5 Achsen umfassende Fräs- und Bohr-Werkzeugmaschine, die dazu geeignet ist, ein in ein Aufnahmemittel eingesetztes Werkzeug 130 programmgesteuert anhand von erzeugten CNC-Steuerdaten anhand vorgegebener, berechneter Werkzeugbahnen zum Abtragen von Material von dem Werkstück 200, das in eine Einspannvorrichtung bzw. in ein Einspannmittel 120 der Werkzeugmaschine 100 eingespannt ist, entlang der Werkzeugbahnen abzutragen.
Die Werkzeugmaschine 100 umfasst hierfür ein Einspannmittel 120 zum Einspannen des Werkstücks 200. In dem vorliegenden Ausführungsbeispiel der Werkzeugmaschine 100 ist das Einspannmittel 120 ein auf einem Werkzeugtisch der Werkzeugmaschine 100 angebrachtes Einspannmittel 120 zum Einspannen des Werkstücks 200, so dass durch Rotation des Werkzeugtisches das Werkstück 200 durch Rotation des Einspannmittels 120 um eine Mittelachse M des Einspannmittels 120 rotiert werden kann.
Die vorliegende Erfindung ist jedoch nicht auf das Erzeugen von Steuerdaten für die Bearbeitung eines in einem Einspannmittel eines Werkzeugtisches eingespannten Werkstücks beschränkt, sondern kann für weiterhin für die Bearbeitung in unterschiedlichen Einspannmittel angewendet werden, z.B. im Falle einer Einspannung eines Werkstücks in einem Einspannmittel eines Teilapparats, insbesondere NC-Teilapparats.
Des Weiteren umfasst die Werkzeugmaschine 100 in dem hier beschriebenen Ausführungsbeispiel in Fig. 1 eine Steuervorrichtung 110, die dazu geeignet ist, das Werkzeug 130 anhand der erzeugten CNC-Steuerdaten zu steuern. Hierbei ist die Steuervorrichtung 110 der 5 Achsen umfassenden Werkzeugmaschine 100 dazu geeignet, das Werkzeug in 3 Linearachsrichtungen translatorisch zu bewegen, wobei die Linearachsen im Folgenden bezeichnet werden als x-Achse, y-Achse und z-Achse.
Des Weiteren ist die Steuervorrichtung 110 dazu geeignet, das Werkzeug 130 um eine rotatorische Achse zu steuern, um somit eine Werkzeugorientierung des Werkzeugs zu ermöglichen. Zusammen mit der rotatorischen Bewegungsachse des Einspannmittels 120 bzw. des Werkzeugtisches ergibt sich somit eine Gesamtanzahl von 5 Achsen, die es ermöglichen, das Werkzeug 130 relativ zu dem in dem Einspannmittel 120 eingespannten Werkstück 200 in 5 Bewegungsfreiheitsgraden, insbesondere 3 translatorischen und 2 rotatorischen Bewegungsfreiheitsgraden, frei bewegen zu können.
Die vorliegende Erfindung ist jedoch nicht auf 5 Achsen umfassende Werkzeugmaschinen beschränkt, sondern kann vielmehr ebenfalls für Werkzeugmaschinen verwendet werden, die mehr als 5 Achsen umfassen, z. B. 6 Achsen, insbesondere 3 translatorische und 3 rotatorische Achsen. Ebenfalls Werkzeugmaschinen mit weniger als 5 Achsen sind möglich.
Die Steuervorrichtung 110 in Fig. 1 umfasst eine Spindel 111, die dazu geeignet ist, das Werkzeug 130 anzutreiben, insbesondere um eine rotatorische Bewegung des Werkzeugs 130 um eine Werkzeugachse des Werkzeugs 130 anzutreiben, um es zu ermöglichen, durch Zerspanen, insbesondere durch Fräsen und/oder Bohren, Material von dem Werkstück 200 abzutragen.
Die in Fig. 1 dargestellte Werkzeugmaschine 100 umfasst weiterhin ein Abtastmittel 140 mit einem Messtaster 141, der dazu geeignet ist, das Werkstück 200 abzutasten, insbesondere das Werkstück 200 mehrfach in unterschiedlichen Winkellagen um die Rotationsachse M des Einspannmittels 120 abzutasten, um es zu ermöglichen, eine Einspannsituation des Werkzeugs 200 in dem Einspannmittel 120 zu ermitteln.

Die vorliegende Erfindung ist jedoch nicht auf die Anwendung an Werkzeugmaschinen 100 mit einem derartigen Abtastmittel 140 mit einem Messtaster 141 beschränkt. Vielmehr ist es ebenfalls möglich, eine Einspannsituation des Werkstücks 200 in dem Einspannmittel 120 zu ermitteln durch mechanisches Abtasten mittels eines Messtasters 141, insbesondere in unterschiedlichen Winkellagen um die Rotationsachse des Einspannmittels 120, wobei der Messtaster 141 im Gegensatz zu dem vorstehend beschriebenen Ausführungsbeispiel der Werkzeugmaschine in eine Steuervorrichtung 110 entsprechend einem Werkzeug 130 ein- bzw. ausgewechselt wird.

Des Weiteren beschreiben die vorstehend beschriebenen Ausführungsbeispiele einer Werkzeugmaschine 100 das Ermitteln einer Einspannsituation des Werkstücks 200 in dem Einspannmittel 120 durch mechanisches Abtasten mittels eines Messtasters 141. Die vorliegende Erfindung ist jedoch nicht auf derartige Werkzeugmaschinen 100 beschränkt, bei denen die Einspannsituation des Werkstücks 200 durch mechanisches Abtasten erfolgt, sondern kann vielmehr ebenfalls auf Werkzeugmaschinen angewendet werden, die ein Abtastmittel 140 umfassen, das dazu geeignet ist, die Einspannsituation des Werkstücks in dem Einspannmittel 120 durch optisches Abtasten, z. B. durch einen Laserstrahl, zu ermitteln.

Neben einem optischen Abtasten mittels eines Laserstrahls ist es weiterhin möglich, das Werkstück durch elektromagnetische Strahlung, die nicht im optischen Wellenlängenbereich liegt, zu ermitteln. Insbesondere ist es auch möglich, die vorliegenden Erfindung auf Werkzeugmaschinen 100 anzuwenden, die ein Abtastmittel 140 umfassen, das eine Einspannsituation des Werkstücks 200 in dem Einspannmittel 120 durch eine Kombination von mechanischem Abtasten durch einen Messtaster 141 und optisches und/oder elektromagnetisches Abtasten ermittelt.

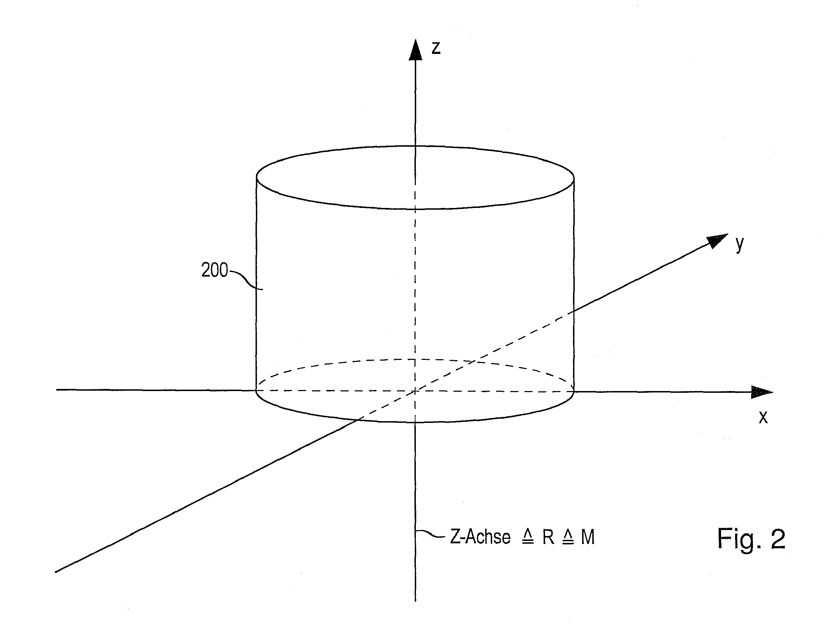

Fig. 2 zeigt beispielhaft einen Einspannsituation-Sollzustand eines Werkstücks 200. Da in einer 5-achsigen CNC-Werkzeugmaschine das Werkzeug 130 anhand erzeugter CNC-Steuerdaten erfolgt, ist es erforderlich, Werkzeugbahnen durch die Steuerdaten vorzugeben, anhand derer die Werkzeugmaschine 100, bzw. die Steuervorrichtung 110 das Werkzeug 130, hier beispielhaft ein Schaftfräser, relativ zu dem in das Einspannmittel 120 eingespannten Werkstück zu bewegen ist. Nach dem Stand der Technik liegt hierbei einer Erzeugung von Steuerdaten zum Steuern des Werkzeugs 130 eine Einspannsituation zugrunde, die dem Einspannsituation-Sollzustand entspricht.

In Fig. 2 ist ein derartiger Einspannsituation-Sollzustand für ein beispielhaftes zylinderförmiges Werkstück 200 dargestellt, wobei Fig. 2 beispielhaft die Richtung der x-Achse, y-Achse und z-Achse darstellt. Der Einfachheit halber ist das Einspannmittel 120 in Fig. 2 nicht dargestellt. Jedoch ist bei dem in Fig. 2 dargestellten Einspannsituation-Sollzustand eine der z-Achse entsprechende Mittelachse M des Werkstücks 200 deckungsgleich mit der Rotationsachse R des Einspannmittels 120, wobei die Rotationsachse R der Achse entspricht, um die es das Einspannmittel 120 ermöglicht, ein in das Einspannmittel 120 eingespanntes Werkstück 200 zu rotieren.

Da im in Fig. 2 dargestellten Einspannsituation-Sollzustand die Mittelachse M des eingespannten Werkstücks 200 und die Rotationsachse R des Einspannmittels 120 deckungsgleich sind, rotiert das eingespannte Werkstück 200 bei Rotation um die Rotationsachse R des Einspannmittels 120 identisch um die eigene Mittelachse M des Werkstücks 200. Insbesondere führt die Mittelachse M des Werkstücks 200 aufgrund der Deckungsgleichheit bei Rotation des Werkstücks 200 um die Rotationsachse R des Einspannmittels 120 keine Taumelbewegung um die Rotationsachse R des Einspannmittels 120 aus.

Anhand der Steuerdaten würde ein Werkzeug 130 entlang der von den Steuerdaten vorgegebenen Werkzeugbahnen Material von dem eingespannten Werkstück 200 abtragen. Weicht jedoch die tatsächliche Einspannsituation des eingespannten Werkstücks 200 von dem in Fig. 2 dargestellten Einspannsituation-Sollzustand ab, wird das Werkstück 200 anhand der Steuerdaten fehlerhaft in der Werkzeugmaschine 100 bearbeitet, da die Steuerdaten unter der Vorgabe der Einspannsituation nach dem Einspannsituation-Sollzustand erzeugt wurden.

Weicht hierbei z. B. die Einspannsituation des Werkstücks 200 derart ab, dass die Mittelachse M des Werkstücks 200 eine Neigung bzw. einen Winkel zu der Rotationsachse R des Einspannmittels 120 aufweist, führt dies bei Rotation des Werkstücks 200 um die Rotationsachse R des Einspannmittels 120 zu einer Taumelbewegung des Werkstücks 200 bzw. zu einer Taumelbewegung der Mittelachse M, da die Mittelachse M des Werkstücks 200 nicht deckungsgleich mit der Rotationsachse R des Einspannmittels 120 ist.

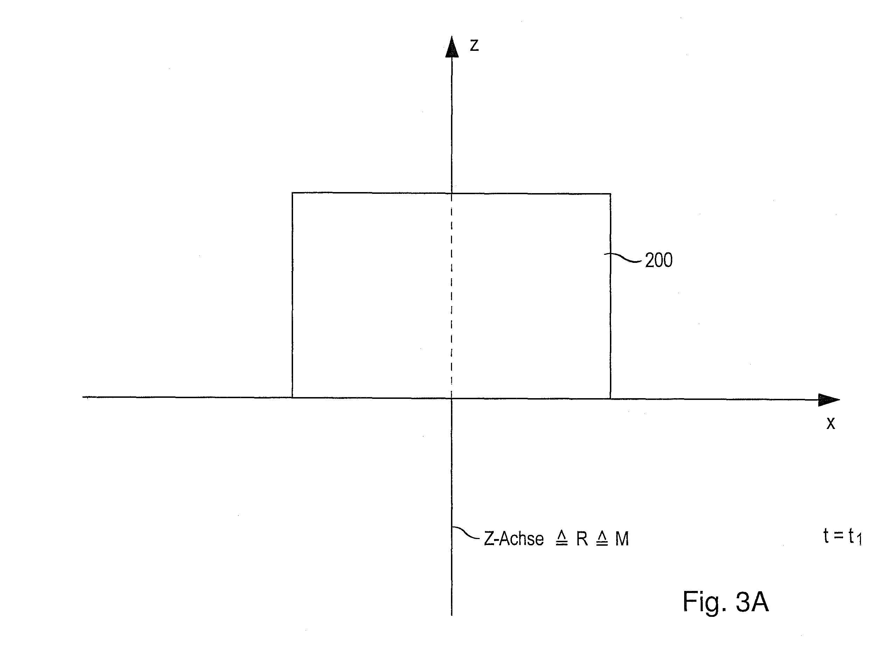

Fig. 3A zeigt einen Querschnitt des in Fig. 1 dargestellten Werkstücks 200 zu einem ersten Zeitpunkt t1 in dem in Fig. 2 dargestellten Einspannsituation-Sollzustand, also bei deckungsgleicher Mittelachse M des Werkstücks 200 mit der Rotationsachse R des Einspannmittels 120 (nicht gezeigt).

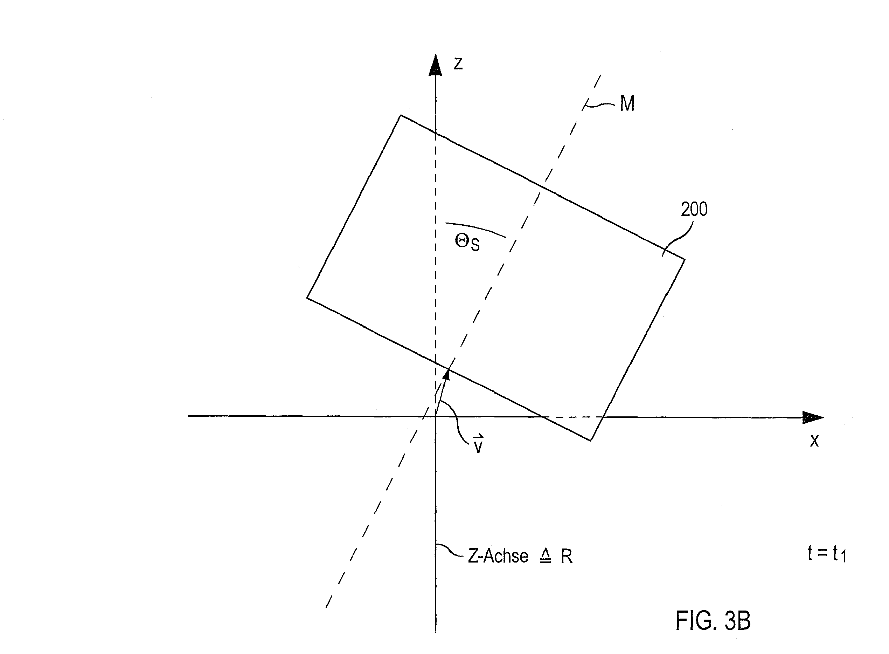

Ein beispielhafter Einspannsituation-Istzustand zu dem ersten Zeitpunkt t1 ist im Querschnitt in Fig. 3B gezeigt. Im Gegensatz zu Fig. 3A weicht die Mittelachse M des eingespannten Werkstücks 200 um einen Winkel $\theta s$ von der Rotationsachse R des Einspannmittels 120 ab. Zusätzlich zu der Winkelabweichung des tatsächlichen Einspannsituation-Istzustands von dem Einspannsituation-Sollzustand weicht der Einspannsituation-Istzustand in Fig. 3B zu dem ersten Zeitpunkt t1 weiterhin derart ab, dass eine Position des Werkstücks 200 zusätzlich zu der Neigung um dem Winkel θs noch um den dargestellten Vektor **v** translatorisch verschoben ist.

Die Abweichung bzw. Einspannsituation-Abweichung zwischen dem Einspannsituation-Sollzustand und dem Einspannsituation-Istzustand ist somit zu dem ersten Zeitpunkt t1 beschreibbar durch die Winkelabweichung θs zwischen der Mittelachse M des Werkstücks 200 und der Rotationsachse R des Einspannmittels 120 und der Positionsverschiebung, zu dem ersten Zeitpunkt t1 gegeben durch den Vektor **v**.

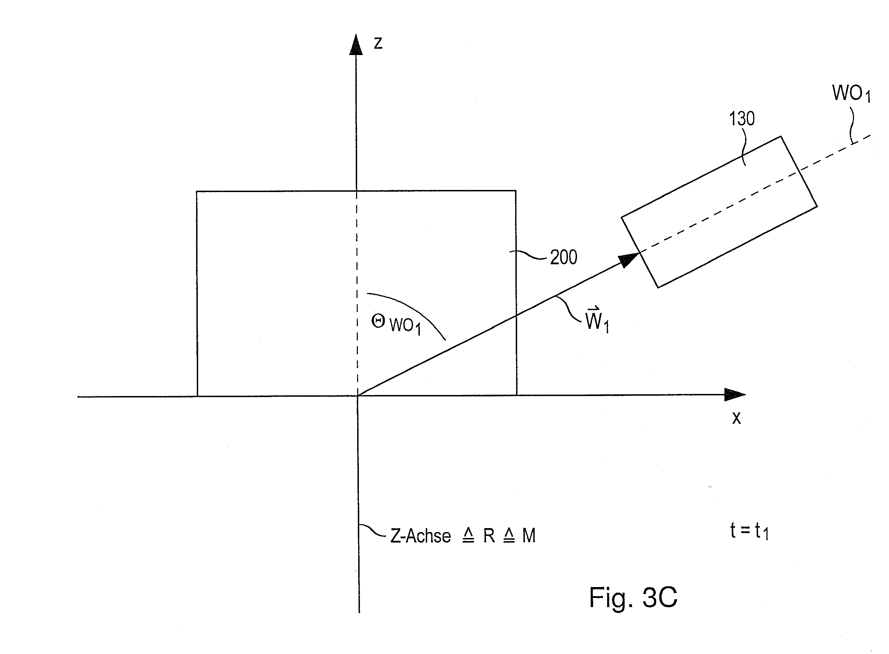

Fig. 3C zeigt erneut den Querschnitt des Werkstücks 200 zu dem ersten Zeitpunkt t1 in dem Einspannsituation-Istzustand, wie in Fig. 3A dargestellt, wobei in Fig. 3C zusätzlich eine Werkzeuganstellung des Werkzeugs 130 zu dem ersten Zeitpunkt t1 dargestellt ist, wie sie sich anhand der erzeugten Steuerdaten zu dem ersten Zeitpunkt t1 ergeben würde. Dies bedeutet, dass die Steuerdaten derart erzeugt sind, dass die Werkzeugmaschine 100 mittels der Steuervorrichtung 110 das Werkzeug 130 derart entlang einer berechneten Werkzeugbahn steuert, dass das Werkzeug zum ersten Zeitpunkt t1 eine Werkzeugposition und eine Werkzeugorientierung wie in Fig. 3C dargestellt einnimmt.

Hierbei ist die Werkzeugposition entsprechend einer ersten Werkzeugposition $W_1$ vektoriell dargestellt (gegeben durch 3 Koordinaten entlang der x-Achse, y-Achse und z-Achse). Eine Orientierung des Werkzeugs 130 zum ersten Zeitpunkt t1 ist gegeben durch eine erste Werkzeugorientierung $WO_1$, die beschrieben wird durch einen Winkel $θ_{WO1}$. Hierbei enthalten die Steuerdaten Daten, die die Werkzeuganstellung zu dem ersten Zeitpunkt t1 angeben, insbesondere Werkzeugpositionsdaten, die die drei Koordinaten des Vektors $W_1$ zu dem ersten Zeitpunkt t1 angeben, und Werkzeugorientierungsdaten, die die erste Werkzeugorientierung $WO_1$ des Werkzeugs 130 zu dem ersten Zeitpunkt t1 anhand des Winkels $θ_{WO1}$ angeben.

Hierbei handelt es sich bei der Darstellung in Fig. 3C um eine vereinfachende Darstellung, in der beispielhaft ein Zeitpunkt t1 gewählt wurde, in dem die Werkzeugorientierung gerade in der x-z-Ebene liegt. Im Allgemeinen ist die Werkzeugorientierung jedoch nicht durch nur einen Winkel $θ_{WO1}$ wie in Fig. 3C gegeben, sondern durch zumindest zwei Winkel (entsprechend der zwei rotatorischen Freiheitsgrade). Jedoch sind durch Angabe von 3 Koordinatenwerten (Positionsdaten) und 2 Winkelwerten (Orientierungsdaten) exakt die jeweiligen Werkzeuganstellungen zu einem bestimmten Zeitpunkt parametrisierbar, da durch die 3 Positionskoordinaten und 2 Winkelparameter alle 5 Freiheitsgrade, die durch die 5 Achsen der CNC-Maschine simultan ansteuerbar sind, zu einem bestimmten Zeitpunkt, z. B. zu dem ersten Zeitpunkt t1, festgelegt sind.

Die in Fig. 3C dargestellte Werkzeuganstellung wird durch die Steuerdaten anhand der Werkzeugpositionsdaten und der Werkzeugorientierungsdaten für den ersten Zeitpunkt t1 vorgegeben, wobei bei der Erzeugung der Steuerdaten davon ausgegangen wird, dass die Einspannsituation des Werkstücks 200 dem Einspannsituation-Sollzustand mit deckungsgleichen Achsen M und R entspricht. Weicht nun der tatsächliche Einspannsituation-Istzustand des Werkstücks 200 von dem Einspannsituation-Sollzustand ab, wird das Werkzeug 130 zum ersten Zeitpunkt t1 anhand der Steuerdaten in eine Werkzeugorientierung und Werkzeugposition gebracht, die relativ zu dem Werkstück nicht der gewünschten Werkzeuganstellung entspricht.

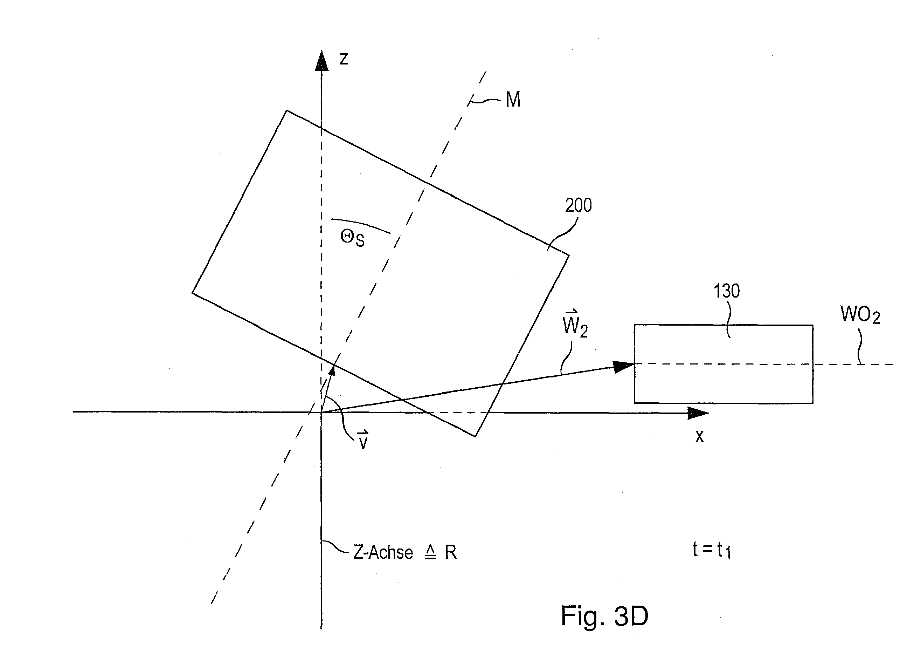

Fig. 3D zeigt das Werkstück 200 im Querschnitt entsprechend dem in Fig. 3B dargestellten Einspannsituation-Istzustand zu dem ersten Zeitpunkt t1, wobei des Weiteren eine Werkzeuganstellung des Werkzeugs 130 entsprechend einer Vorgabe durch erfindungsgemäß erzeugte transformierte Steuerdaten dargestellt ist, so dass die Werkzeuganstellung in Fig. 3D relativ zu dem Werkstück 200 exakt der Werkzeuganstellung des Werkzeugs 130 relativ zu dem Werkstück 200 wie in Fig. 3C dargestellt entspricht.

Hierfür wird das Werkzeug derart gesteuert, dass die Werkzeugposition zu dem ersten Zeitpunkt t1 der zweiten Werkzeugposition $W_2$ entspricht, die in Fig. 3D durch den Vektor $W_2$ dargestellt ist, und dass weiterhin die Werkzeugorientierung des Werkzeugs 130 zu dem ersten Zeitpunkt einer zweiten Werkzeugorientierung $WO_2$ entspricht.

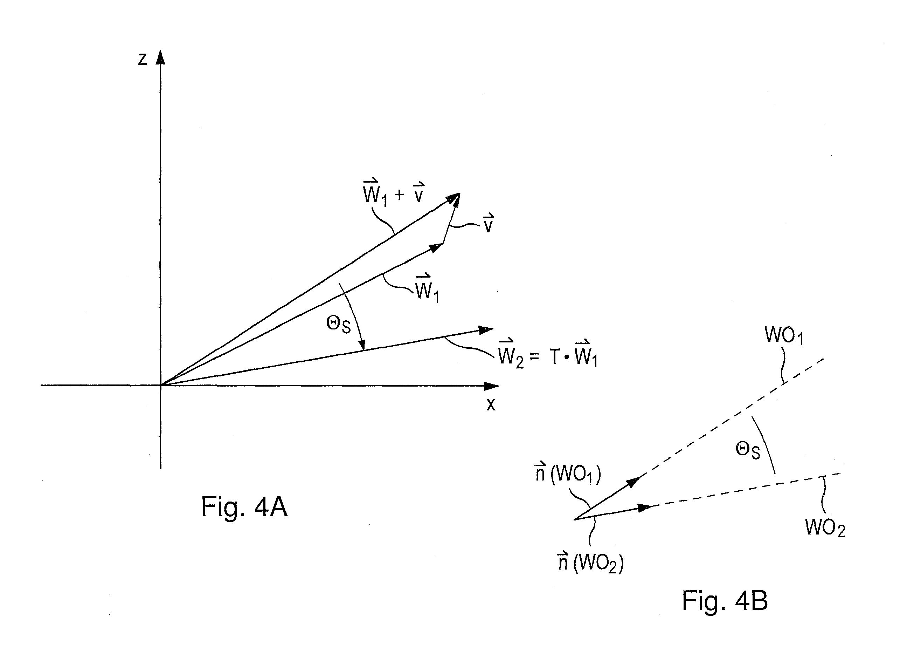

In den Figuren 4A und 4B ist eine Transformation der Werkzeugpositionsdaten der Steuerdaten zu dem ersten Zeitpunkt t1 zu den transformierten Werkzeugpositionssteuerdaten der transformierten Steuerdaten und eine Transformation der Werkzeugorientierungsdaten der Steuerdaten zu den transformierten Werkzeugorientierungsdaten der transformierten Steuerdaten zu dem ersten Zeitpunkt t1 gezeigt.

Fig. 4A zeigt den Vektor $W_1$, der eine erste Werkzeugposition zum ersten Zeitpunkt t1 entsprechend Fig. 3C angibt. Die Transformation der Steuerdaten, die die Koordinaten des Vektors $W_1$ zum ersten Zeitpunkt t1 angeben ergibt sich hiermit durch Addition des Vektors v, der einer Positionsverschiebung des Werkstücks (translatorische Abweichung zwischen Einspannsituation-Istzustand und Einspannsituation-Sollzustand) wie in Fig. 3B dargestellt entspricht, so dass sich zuerst ein weiterer Vektor $W_1$ + **v** ergibt. Dieser entspricht jedoch noch nicht den transformierten Werkzeugpositionsdaten, sondern hierfür muss des Weiteren derart transformiert werden, dass der Vektor $W_1$ + **v** in den Winkel θs rotiert wird, wobei der Winkel θs der rotatorischen Abweichung zwischen dem Einspannsituation-Istzustand und dem Einspannsituation-Sollzustand, wie in Fig. 3B dargestellt entspricht. Somit ergibt sich die zweite Werkzeugposition, beschrieben durch die Koordinaten des Vektors $W_2$, zum ersten Zeitpunkt t1 durch Transformation um den Vektor **v** und einer weiteren Rotationstransformation um den Winkel θs, oder anders ausgedrückt durch eine einzige Transformation entsprechend einer Transformationsmatrix **T,** so dass von den Werkzeugpositionsdaten zu den transformierten Werkzeugpositionsdaten folgendermaßen formiert wird:

$$W_2 = T \cdot W_1 \ .$$

Fig. 4B zeigt analog die Transformation (Rotationstransformation) der Werkzeugorientierungsdaten von den Werkzeugorientierungsdaten zu den transformierten Werkzeugorientierungsdaten. In Fig. 4B wird die Werkzeugorientierung durch Normalenvektoren $n(WO_1)$ und $n(WO_2)$ beschrieben, die die Richtungen der ersten Werkzeugorientierung $WO_1$ und der zweiten Werkzeugorientierung $WO_2$ beschreiben, die um den Winkel θs, wie in Fig. 3C und 3D dargestellt, abweichen. Somit handelt es sich bei der Transformation von den Werkzeugorientierungsdaten zu den transformierten Werkzeugorientierungsdaten bzw. von der ersten Werkzeugorientierung $WO_1$ und zweiten Werkzeugorientierung $WO_2$ um eine reine Rotationstransformation um den Winkel θs.

Im Allgemeinen wird diese Rotationstransformation zu einem bestimmten Zeitpunkt, jedoch nicht wie in den Figuren 3A bis 4B durch nur einen Winkel θs parametrisiert, sondern durch zwei Winkel, so dass beliebige Werkzeugorientierungen in beliebige davon abweichende Werkzeugorientierungen parametrisiert werden können, auch wenn sie nicht wie in Fig. 4B dargestellt, in der z-x-Ebene liegen.

Wie vorstehend beschrieben, werden erfindungsgemäß somit transformierte Steuerdaten anhand der Steuerdaten erzeugt, wobei in Abhängigkeit von einer ermittelten Abweichung zwischen dem Einspannsituation-Sollzustand und dem Einspannsituation-Istzustand erfindungsgemäß derart transformiert wird, dass die Werkzeugmaschine 100 bzw. die Steuervorrichtung 110 das Werkzeug 130 anhand der transformierten Steuerdaten zum Bearbeiten des Werkstücks 200 derart steuert, dass das Werkstück trotz der von dem Einspannsituation-Sollzustand abweichenden Einspannsituation korrekt bearbeitet wird, so dass die Bearbeitung exakt einer Bearbeitung des Werkstücks 200 entspricht, wenn dieses in einer dem Einspannsituation-Sollzustand entsprechenden Einspannsituation eingespannt anhand der Steuerdaten bearbeitet würde.

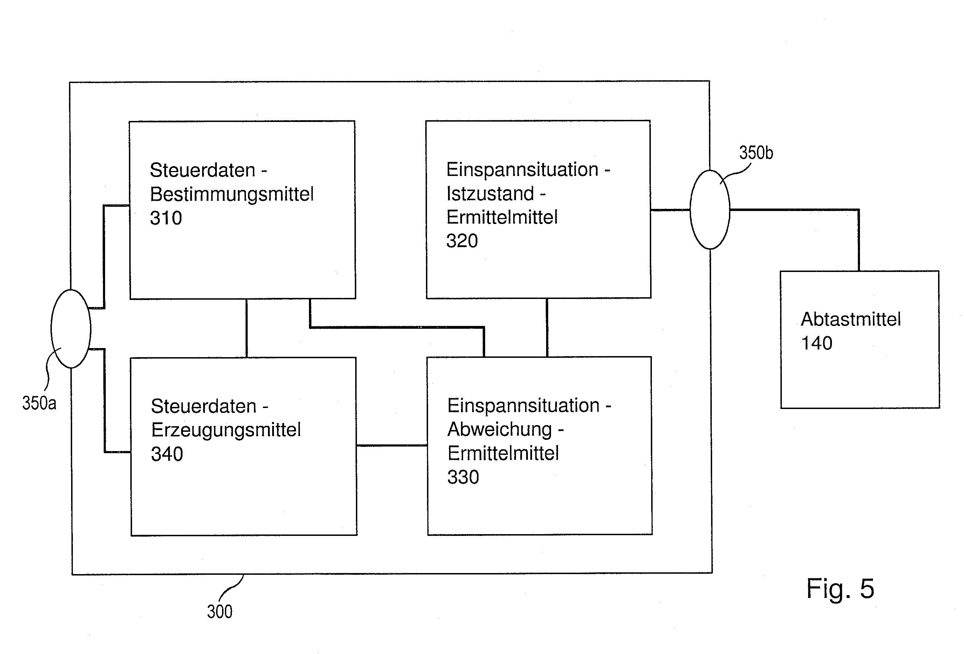

Fig. 5 zeigt ein Ausführungsbeispiel einer erfindungsgemäßen Vorrichtung 300 zum Erzeugen von transformierten Steuerdaten zum Steuern des Werkzeugs 130 an der Werkzeugmaschine 100, wobei die Vorrichtung 300 ein Steuerdaten-Bestimmungsmittel 310, ein Einspannsituation-Istzustand-Ermittelmittel 320, ein Einspannsituation-Abweichung-Ermittelmittel 330 und ein Steuerdaten-Erzeugungsmittel 340 umfasst.

Das Steuerdaten-Bestimmungsmittel 310 ist hierbei dazu geeignet, Steuerdaten zu bestimmen, die angeben, welche erste Werkzeugbahn durch das Werkzeug 130 der Werkzeugmaschine 100, mit welcher Werkzeugorientierung zum Bearbeiten des eingespannten Werkstücks 200 abzufahren ist, wenn das Werkstück entsprechend des Einspannsituation-Sollzustands eingespannt wäre.

Hierfür umfasst die Vorrichtung 300 nach diesem Ausführungsbeispiel eine Schnittstelle 350a, die dazu geeignet ist, mit einem Mittel zum Erzeugen von Steuerdaten zu kommunizieren, um es dem Steuerdaten-Bestimmungsmittel 310 zu ermöglichen, die Steuerdaten, die von einem anderen System erzeugt wurden, über die Schnittstelle 350a zu bestimmen. Hierfür ist es weiterhin erforderlich, dass das Steuerdaten-Bestimmungsmittel 310 den Einspannsituation-Sollzustand bestimmt, der den Steuerdaten zugrunde liegt.

Die vorliegende Erfindung ist jedoch nicht auf Ausführungsformen beschränkt, bei denen ein Steuerdaten-Bestimmungsmittel 310 erzeugte Steuerdaten über eine Schnittstelle 350a von einer externen Quelle bestimmt werden können, sondern vielmehr kann die die Vorrichtung 300 nach einem anderen Ausführungsbeispiel der vorliegenden Erfindung Bestandteil des Systems, insbesondere eines Rechnersystems in Verbindung mit einem CAD-/CAM-System, sein, das schon die Steuerdaten erzeugt.

Das Einspannsituation-Istzustand-Ermittelmittel 320 ist dazu geeignet, die tatsächliche Einspannsituation des Werkstücks 200 zu ermitteln, wobei in diesem Ausführungsbeispiel das Einspannsituation-Istzustand-Ermittelmittel 320 über eine Schnittstelle 350b (alternativ auch über die Schnittstelle 350a) mit einem Abtastmittel 140 der Werkzeugmaschine 100 verbunden ist, welches die Einspannsituation bzw. den Einspannsituation-Istzustand des Werkstücks 200 durch mechanisches und/ oder optisches Abtasten des Werkstücks 200 in unterschiedlichen Winkellagen durchführt.

Die Vorrichtung 300 umfasst weiterhin einen Einspannsituation-Abweichungs-Ermittelmittel 330, das dazu geeignet ist, anhand der von dem Einspannsituation-Istzustand-Ermittelmittel 320 ermittelten Einspannsituation des Werkstücks 200 im Vergleich mit dem Einspannsituation-Sollzustand eine Einspannsituation-Abweichung zu ermitteln, die gegebenenfalls eine rotatorische Abweichung der Mittelachse M des eingespannten Werkstücks 200 von der Rotationsachse R des Einspannmittels 120 erfasst, und des Weiteren eine translatorische Verschiebung entsprechend z. B. dem Vektor **v** in Fig. 3B.

Des Weiteren umfasst die Vorrichtung 300 ein Steuerdaten-Erzeugungsmittel 340, das dazu geeignet ist, transformierte Steuerdaten nach zumindest einem der vorstehenden Ausführungsbeispiele des Verfahrens der vorliegenden Erfindung zu erzeugen. Nach diesem Ausführungsbeispiel ist das Steuerdaten-Erzeugungsmittel 340 über die Schnittstelle 350a dazu geeignet, mit einer Steuervorrichtung der Werkzeugmaschine 100 zu kommunizieren, so dass die Werkzeugmaschine 100 anhand der Steuerdaten, die von dem Steuerdaten-Erzeugungsmittel 340 erzeugt wurden, das Werkzeug 130 zu steuern. Hierbei kann die Vorrichtung 300 in einer Ausführungsform der vorliegenden Erfindung an die Werkzeugmaschine 100 angebracht sein oder mit der Werkzeugmaschine integriert sein, so dass die transformierten Steuerdaten gegebenenfalls in Echtzeit erzeugt werden können, wobei das Steuerdaten-Erzeugungsmittel 340 die transformierten Steuerdaten derart erzeugt, dass zu so einem bestimmten Zeitpunkt im Wesentlichen gleichzeitig die Steuerdaten von dem Steuerdaten-Erzeugungsmittel erzeugt werden, und das Werkzeug anhand der erzeugten Steuerdaten programmgesteuert gesteuert wird.

Die vorliegende Erfindung ist jedoch nicht auf derartiges, in Echtzeit erfolgendes Erzeugen der transformierten Steuerdaten beschränkt, sondern vielmehr können des Weiteren zuerst transformierte Steuerdaten anhand der Steuerdaten und der ermittelten Abweichung der Einspannsituation zwischen dem Einspannsituation-Istzustand und dem Einspannsituation-Sollzustand erzeugt werden, so dass erst in einem darauffolgenden Schritt die erzeugten transformierten Steuerdaten an die Werkzeugmaschine 100 übermittelt werden, so dass das Werkzeug 130 anhand der Steuerdaten gesteuert werden kann.

**Patentansprüche**

1. Verfahren zum Erzeugen von Steuerdaten zum Steuern eines Werkzeugs (130) an einer Werkzeugmaschine (100) zum Bearbeiten eines in ein Einspannmittel (120) der Werkzeugmaschine (100) eingespannten Werkstücks (200) durch Zerspanen, mit dem Verfahrensschritt:

   - Bestimmen von Steuerdaten zum Steuern des Werkzeugs (130) der Werkzeugmaschine (100) entlang einer erste Werkzeugbahn mit einer bestimmten ersten Werkzeugorientierung (WO1) zum Bearbeiten des eingespannten Werkstücks (200) entsprechend eines Einspannsituation-Sollzustands, der einen Sollzustand einer Einspannsituation des in das Einspannmittel (120) eingespannten Werkstücks (200) angibt,

   **gekennzeichnet durch** die weiteren Verfahrensschritte:

   - Ermitteln eines Einspannsituation-Istzustands, der einen tatsächlichen Istzustand der Einspannsituation des in das Einspannmittel (120) eingespannten Werkstücks (200) angibt,
   - Ermitteln einer Einspannsituation-Abweichung zwischen dem Einspannsituation-Istzustand und dem Einspannsituation-Sollzustand, die eine Abweichung zwischen dem Einspannsituation-Istzustand und dem Einspannsituations-Sollzustand angibt, und
   - Erzeugen von transformierten Steuerdaten **durch** Ausführen einer Transformation zumindest eines Teils der bestimmten Steuerdaten in Abhängigkeit der ermittelten Einspannsituation-Abweichung,

   wobei das Werkzeug anhand der transformierten Steuerdaten derart gesteuert wird, dass das Werkzeug (130) der Werkzeugmaschine (100) in Abhängigkeit der ermittelten Einspannsituation-Abweichung eine zweite Werkzeugbahn mit einer bestimmten zweiten Werkzeugorientierung (W02) zum Bearbeiten des eingespannten Werkstücks (200) abfährt.

2. Verfahren nach Anspruch 1, **dadurch gekennzeichnet, dass** das Werkstück (200) im Einspannsituation-Sollzustand derart in das Einspannmittel (120) der Werkzeugmaschine (100) eingespannt ist, dass eine Mittelachse (M) des Werkstücks deckungsgleich mit einer Rotationsachse (R) des Einspannmittels (120) der Werkzeugmaschine (100) ist.

3. Verfahren nach Anspruch 1 oder Anspruch 2, **dadurch gekennzeichnet, dass** die Transformation im Schritt Erzeugen von transfromierten Steuerdaten derart ausgeführt wird, dass ein Bearbeiten des entsprechend des Einspannsituation-Istzustands eingespannten Werkstücks (200) anhand der transformierten Steuerdaten an der Werkzeugmaschine (100) dem Bearbeiten des entsprechend des Einspannsituation-Sollzustands eingespannten Werkstücks (200) anhand der bestimmten Steuerdaten an der Werkzeugmaschine (100) entspricht.

4. Verfahren nach zumindest einem der Ansprüche 1 bis 3, **dadurch gekennzeichnet, dass** der Schritt Ermitteln des Einspannsituation-Istzustands des in dem Einspannmittel (120) der Werkzeugmaschine (100) eingespannten Werkstücks (200) optisches Abtasten, induktives Abtasten und/oder mechanisches Abtasten einer Außenseite des Werkstücks (200) umfasst.

5. Verfahren nach Anspruch 4, **dadurch gekennzeichnet, dass** das in dem Einspannmittel der Werkzeugmaschine eingespannte Werkstück zum Bestimmen einer tatsächlichen Einspannsituation entsprechend dem Einspannsituation-Istzustand durch Ermitteln einer jeweiligen Position von verschiedenen auf der Außenseite des Werkstücks (200) liegenden Punkten optisch, induktiv und/oder mechanisch abgetastet wird.

6. Verfahren nach Anspruch 4 oder Anspruch 5, **da-**

**durch gekennzeichnet, dass** das optische Abtasten, induktive Abtasten und/oder mechanische Abtasten von einem Abtastmittel (140) der Werkzeugmaschine (100) automatisch ausgeführt wird.

7. Verfahren nach zumindest einem der Ansprüche 1 bis 6, **dadurch gekennzeichnet, dass** im Schritt Erzeugen von Steuerdaten die bestimmten Steuerdaten an der Werkzeugmaschine in Echtzeit in entsprechende Maschinenverfahrbefehle transformiert werden.

8. Verfahren nach zumindest einem der Ansprüche 1 bis 7, **gekennzeichnet durch** den Schritt Abfahren der zweiten Bearbeitungsbahn **durch** das Werkzeug (130) anhand der transformierten Steuerdaten, wobei die transformierten Steuerdaten in Echtzeit erzeugt werden.

9. Vorrichtung zum Erzeugen von Steuerdaten zum Steuern eines Werkzeugs (130) an einer Werkzeugmaschine (100) zum Bearbeiten eines in ein Einspannmittel (120) der Werkzeugmaschine eingespannten Werkstücks (200) durch Zerspanen nach einem Verfahren nach zumindest einem der Ansprüche 1 bis 8, mit:

   - einem Steuerdaten-Bestimmungsmittel (310) zum Bestimmen von Steuerdaten zum Steuern des Werkzeugs (130) der Werkzeugmaschine (100) entlang einer ersten Werkzeugbahn durch das Werkzeug (130) der Werkzeugmaschine (100) mit einer ersten Werkzeugorientierung (WO1) zum Bearbeiten des eingespannten Werkstücks (200), wenn das Werkstück (200) entsprechend eines Einspannsituation-Sollzustands, der einen Sollzustand einer Einspannsituation des in das Einspannmittel (120) eingespannten Werkstücks (200) angibt, in das Einspannmittel (120) eingespannt ist,

   **gekennzeichnet durch**

   - ein Einspannsituation-Istzustands-Ermittelmittel (320) zum Ermitteln eines Einspannsituation-Istzustands, der einen tatsächlichen Istzustand der Einspannsituation des in das Einspannmittel (120) eingespannten Werkstücks (200) angibt,
   - ein Einspannsituation-Abweichung-Ermittelmittel (330) zum Ermitteln einer Einspannsituation-Abweichung zwischen dem Einspannsituation-Istzustand und dem Einspannsituations-Sollzustand, die eine Abweichung zwischen dem Einspannsituation-Istzustand und dem Einspannsituations-Sollzustand angibt, und
   - ein Steuerdaten-Erzeugungsmittel (340) zum Erzeugen von transformierten Steuerdaten **durch** Ausführen einer Transformation zumindest eines Teils der bestimmten Steuerdaten in Abhängigkeit der ermittelten Einspannsituation-Abweichung,

   wobei das Werkzeug (130) anhand der transformierten Steuerdaten derart gesteuert wird, dass das Werkzeug (130) der Werkzeugmaschine (100) in Abhängigkeit der ermittelten Einspannsituation-Abweichung eine zweite Werkzeugbahn mit einer bestimmten zweiten Werkzeugorientierung (WO2) zum Bearbeiten des eingespannten Werkstücks (200) abfährt.

10. Vorrichtung nach Anspruch 9, **dadurch gekennzeichnet, dass** die Vorrichtung dazu geeignet ist, in einer Werkzeugmaschine (100) eingebaut zu werden, wobei die Werkzeugmaschine (100) das Einspannmittel (120) zum Einspannen des Werkstücks (200) umfasst.

11. Vorrichtung nach Anspruch 10, **dadurch gekennzeichnet, dass** die Werkzeugmaschine (100) zumindest 5 Achsen umfasst, wobei die 5 Achsen anhand von CNC-Steuerdaten simultan ansteuerbar sind.

12. Werkzeugmaschine mit zumindest 5 Achsen zum Bearbeiten eines Werkstücks (200) mittels eines Werkzeugs (130) durch Zerspanen mit einem Einspannmittel (120) zum Einspannen des Werkstücks (200) und einem Steuermittel (110) zum Steuern des Werkzeugs (130) anhand von Steuerdaten, die angeben welche Werkzeugbahn durch das Werkzeug (120) mit welcher Werkzeugorientierung zum Bearbeiten des eingespannten Werkstücks (200) abzufahren ist, **dadurch gekennzeichnet, dass** die Werkzeugmaschine (100) eine Vorrichtung (300) nach den Ansprüchen 9 bis 11 umfasst.

13. Werkzeugmaschine nach Anspruch 12, **dadurch gekennzeichnet, dass** die Werkzeugmaschine (100) weiterhin ein Abtastmittel (140) umfasst und der Schritt Ermitteln des Einspannsituation-Istzustands des in dem Einspannmittel (120) der Werkzeugmaschine (100) eingespannten Werkstücks (200) optisches Abtasten, induktives Abtasten und/oder mechanisches Abtasten einer Außenseite des Werkstücks (200) umfasst, wobei das optische, induktive und/oder mechanische Abtasten von dem Abtastmittel (140), insbesondere das mechanische Abtasten durch einen Messtaster (141) des Abtastmittels (140), automatisch ausgeführt wird.

14. Werkzeugmaschine nach Anspruch 12 oder Anspruch 13, **dadurch gekennzeichnet, dass** die Werkzeugmaschine (100) einen Teilapparat umfasst, wobei der Teilapparat das Einspannmittel (120) zum Einspannen des Werkstücks (200) hat und dazu geeignet ist, das eingespannte Werkstück (200) um eine Rotationsachse (R) des Einspannmittels (120) zu rotieren.

15. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind, von einem Datenverarbeitungsmittel einer Datenverarbeitungsrichtung verarbeitet zu werden, so dass die Datenverarbeitungseinrichtung in Verbindung mit dem Computerprogrammprodukt oder in Verbindung mit einem Programm zum Erzeugen von Steuerdaten und dem Computerprogrammprodukt dazu geeignet ist, ein Verfahren nach zumindest einem der Ansprüche 1 bis 8 auszuführen.

Fig. 1

Fig. 2

Z-Achse $\hat{=}$ R $\hat{=}$ M

x

y

z

200

EP 2 216 698 A2

Z-Achse $\triangleq$ R $\triangleq$ M

$t = t_1$

Fig. 3A

FIG. 3B

Fig. 3C

$t = t_1$

Z-Achse $\triangleq$ R $\triangleq$ M

$WO_2$

130

200

M

$\Theta_S$

z

x

$\vec{W}_2$

$\vec{V}$

Z-Achse $\triangleq$ R

$t = t_1$

Fig. 3D

Fig. 4A

Fig. 4B

Fig. 5

EP 2 216 698 A2

**IN DER BESCHREIBUNG AUFGEFÜHRTE DOKUMENTE**

**In der Beschreibung aufgeführte Patentdokumente**

- DE 102007016056 A1
- DE 19631620 A1